# EUROPÄISCHE PATENTSCHRIFT

(11) **EP 2 074 390 B1**
(45) Veröffentlichungstag und Bekanntmachung des Hinweises auf die Patenterteilung: **04.10.2017**
(21) Anmeldenummer: 07803126.7
(22) Anmeldetag: 31.08.2007
(51) Int. Cl.: G01F 1/84, G01F 1/80, G01F 25/00

(54) **VERFAHREN ZUR BESTIMMUNG DES MASSEDURCHFLUSSES EINES AUF EINEM ROTATIONSFÜLLER ANGEORDNETEN CORIOLIS-MASSEDURCHFLUSSMESSGERÄTS**
METHOD FOR DETERMINING THE MASS FLOW THROUGH A CORIOLIS MASS FLOWMETER ARRANGED ON A ROTATING FILLING ELEMENT
PROCEDE POUR DETERMINER LE DEBIT MASSIQUE D'UN DEBITMETRE MASSIQUE A EFFET CORIOLIS DISPOSE SUR UN EQUIPEMENT DE REMPLISSAGE ROTATIF

(30) Priorität: 19.09.2006 DE 102006044592
(43) Veröffentlichungstag der Anmeldung: 01.07.2009
(73) Patentinhaber: Endress + Hauser Flowtec AG, 4153 Reinach (CH)
(72) Erfinder: ECKERT, Gerhard, 79639 Grenzach-Wyhlen (DE); MATT, Christian, 4147 Aesch (CH); ALTENDORF, Matthias, 79539 Lörrach (DE)
(74) Vertreter: Andres, Angelika Maria
(86) Internationale Anmeldenummer: PCT/EP2007/059139
(87) Internationale Veröffentlichungsnummer: WO 2008/034710

(56) Entgegenhaltungen:
- WO-A-2004/049641
- WO-A-2005/031285
- WO-A-2006/036139
- FR-A- 2 750 689

## Beschreibung

Die Erfindung betrifft ein Verfahren zur Bestimmung des Massedurchflusses eines auf einem Rotationsfüller angeordneten Coriolis-Massedurchflussmessgeräts.

Häufig werden zum Abfüllen von Flüssigkeiten, insbesondere Lösungsmitteln, Farben, Reinigungsmitteln oder pharmazeutischen Produkten Coriolis-Massedurchflussmessgerät eingesetzt. Diese Massedurchflussmesser ermöglichen eine sehr genaue Dosierung der abzufüllenden Flüssigkeit. Ein Beispiel für einen solchen Massedurchflussmesser ist das Produkt Promass 83T15 der Fa. Endress+Hauser.

In der Industrie werden zum Abfüllen von Flüssigkeiten neben Linienfüller auch so genannte Rotationsfüller eingesetzt, die teilweise auch als Karussellabfüllmaschinen bezeichnet werden.

In den Dokumenten EP 893 396 B1 bzw. EP 414 031 A1 sind Rotationsfüller jeweils allgemein beschrieben.

Derartige Abfüllmaschinen ermöglichen einen Flaschendurchsatz von typisch bis zu 20'000 pro Stunde. Hierbei werden die zu füllenden Flaschen kontinuierlich über eine entsprechende Zuführung zu dem Rotationsfüller befördert. Der eigentliche Abfüllvorgang erfolgt während des Zeitraums in dem sich die Flaschen auf dem Rotationsfüller befinden. Nach der Befüllung verlassen die Flaschen den Rotationsfüller und werden automatisch weiterbefördert. Dokument FR 2 750 689 offenbart ein auf einem Rotationsfüller angeordnetes Coriolis- Massedurchflussmessgerät.

Es hat sich gezeigt, dass die Messgenauigkeit von Coriolis-Massedurchflussmesser bei Rotationsfüller nicht immer ausreichend ist, um eine exakte Dosierung zu gewährleisten

Aufgabe der vorliegenden Erfindung ist es deshalb, ein Verfahren zur Bestimmung des Massedurchflusses bei Rotationsfüllern mit einem Coriolis-Massedurchflussmessgerät anzugeben, das eine genaue Bestimmung des Massedurchflusses ermöglicht und damit eine exakte Dosierung zu gewährleisten.

Gelöst wird diese Aufgabe durch die in Anspruch 1 angegebenen Verfahrensmerkmale.

Vorteilhafte Weiterentwicklungen der Erfindung sind in den Unteransprüchen angegeben.

Die wesentliche Idee der Erfindung besteht darin, den von einem Coriolis-Massedurchflussmessgerät ermittelten Messwert für den Massedurchfluss mit einem Wert zu korrigieren, der proportional zur Drehzahl des Rotationsfüllers ist.

In einer Weiterbildung des erfindungsgemäßen Verfahrens wird die Korrektur direkt im Coriolis-Massedurchflussmessgerät vorgenommen. Die Drehzahl des Rotationsfüllers wird hierzu an das Coriolis-Massedurchflussmessgerät übermittelt.

Nachfolgend ist die Erfindung anhand eines in der Zeichnung dargestellten Ausführungsbeispiels näher erläutert.

### Es zeigen:

Fig. 1 schematische Ansicht einer Abfüllstelle eines Rotationsfüllers ;
Fig. 2 schematische Aufsicht auf einen Drehteller eines Rotationsfüllers gemäß Fig. 1;
Fig. 3 schematische Darstellung der Schwingungsbewegungen eines Coriolis-Massedurchflussmessgeräts mit zwei Messrohren bei einem sich drehenden Rotationsfüller.

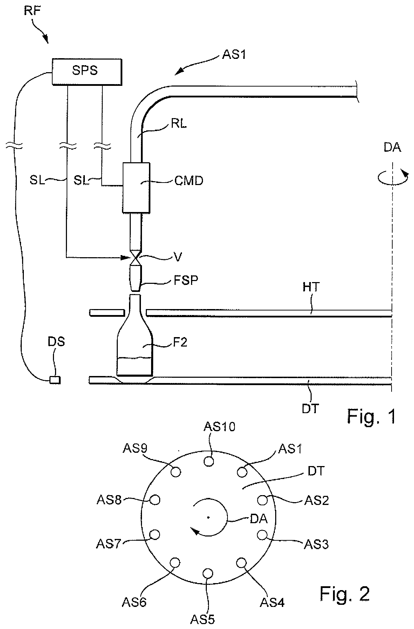

In Fig. 1 ist eine Abfüllstelle AS1 eines Rotationsfüllers RF schematisch dargestellt. Der Rotationsfüller RF weist insgesamt 10 Abfüllstellen AS1-AS10 auf. Jede Abfüllstelle des Rotationsfüllers RF ist identisch aufgebaut. Die Abfüllstelle AS1 weist ein Coriolis-Massedurchflussmessgerät CMD, ein Ventil V und eine Füllspitze FSP auf, die über eine Rohrleitung RL verbunden sind. Unterhalb der Füllspitze FSP befindet sich eine Flasche FL, die gerade befüllt wird. Der Flüssigkeitspegel in der Falsche FL ist durch eine Wellenlinie angedeutet.

Die Flasche FL wird während des Befüllens auf einem Drehtisch DT geführt, der Flaschenhals ist durch eine zusätzliche Halterung HT fixiert. Die Flüssigkeit wird über die Rohrleitung RL von einem nicht näher dargestellten Abfüllbehälter zugeführt. Der Dosiervorgang wird mit Hilfe einer speicherprogrammierbaren Steuerung SPS gesteuert. Hierzu ist die SPS mit dem Coriolis-Massedurchflussmessgerät CMD und dem Ventil V über entsprechende Signalleitungen SL verbunden. Die Steuerung SPS kann sowohl auf dem Rotationsfüller RF als auch außerhalb des Rotationsfüllers RF angeordnet sein. Die Signalleitungen von der Steuerung zu den weiteren Abfüllstationen sind der Übersichtlichkeit halber nicht dargestellt.

Die Datenübertragung auf der Signalleitung kann analog oder digital erfolgen. Die SPS steuert durch Öffnen und Schließen des Ventils V den Abfüllvorgang an der Abfüllstation AS1. Die abzufüllende Menge Flüssigkeit wird mit Hilfe des Coriolis-Massedurchflussmessgeräts CMD bestimmt. Weiterhin ist die Steuerung SPS mit einem Drehratensensor DS verbunden, der am Rand des Drehtisches DT angeordnet ist und der die Drehzahl des Rotationsfüllers RF erfasst. Die Drehachse DA, um die sich der Rotationsfüller RF dreht, ist gestichelt dargestellt. Sie verläuft parallel zur Längsachse des Coriolis-Massedurchflussmessgeräts CMD.

In Fig. 2 ist eine Aufsicht auf den Drehteller DT des Rotationsfüllers mit den 10 Abfüllstellen AS1-AS10 dargestellt.

Nachfolgend ist das erfindungsgemäße Verfahren näher erläutert.

In einem ersten Verfahrensschritt a) wird der Massedurchfluss *ṁ* mit Hilfe des Coriolis-Massedurchflussmessgeräts CMD in herkömmlicher Weise bestimmt. In einem zweiten Verfahrensschritt b) wird die Drehzahl n des Rotationsfüllers RF ermittelt. Anschließend wird im Verfahrensschritt c) ein Korrekturwert Δ *ṁ* berechnet, wobei Δ *ṁ* = k * n ist. Der Korrekturwert Δ *ṁ* ist somit proportional zur Drehzahl n, mit einer Proportionalitätskonstanten k. In einem letzten Verfahrensschritt d) wird der Massedurchfluss *ṁ* ₖₒᵣᵣ bestimmt wobei *ṁ* ₖₒᵣᵣ = *ṁ* - Δ *ṁ*. Bei dem erfindungsgemäßen Verfahren wird der in herkömmlicher Weise gemessene Messwert *ṁ* mit einem Korrekturwert Δ *ṁ* korrigiert, der proportional zur Drehzahl n des Rotationsfüllers ist. Mit wachsender Drehzahl n wird der Einfluss des Korrekturwerts Δ *ṁ* immer größer.

Die Konstante k kann bei der Inbetriebnahme des Rotationsfüllers RF bestimmt werden. Hierzu wird die Verschiebung des Messnullpunkts in Abhängigkeit der Drehzahl n bei geschlossenem Ventil ermittelt. Ein konkreter Wert für Nullpunktsverschiebung bei 10 Umdrehungen des Drehtisches DT pro Minute ist z. B. 3,4 kg/h, was für die Konstante k einen Wert von 0,34 kg/h / 1/min ergibt.

Durch Berücksichtigung des Korrekturwerts Δ *ṁ* bei der Bestimmung des Massedurchflusses wird die Abfüllgenauigkeit bei Rotationsfüller erheblich verbessert. Die Korrektur kann auch direkt im Coriolis-Massedurchflussmessgerät CMD erfolgen. Hierzu muss die Drehzahl n an das Coriolis-Massedurchflussmessgerät CMD übermittelt werden. Für eine verbesserte Messgenauigkeit sind das bzw. die Messrohre des Coriolis-Massedurchflussmessgeräts CMD parallel zur Drehachse DA des Rotationsfüllers RF angeordnet.

Untersuchungen haben gezeigt, dass der Fehler der bei einer herkömmlichen Bestimmung des Massedurchflusses gemacht wird, wahrscheinlich darauf zurückzuführen ist, dass die Sensoren, die zur Erfassung der Schwingungsbewegung des bzw. der Messrohre dienen, eine zusätzliche durch die Rotation des Rundfüllers verursachte Schwingungsbewegung erfassen.

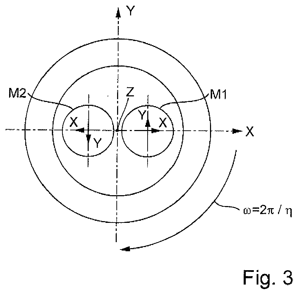

Diese Erklärung soll kurz anhand der Figur 3 erläutert werden. Hier ist die Schwingungsbewegung von zwei Messrohren M1 und M2 eines Coriolis-Massedurchflussmessgeräts CMD schematisch dargestellt. Die Gehäusewandungen des Geräts sind durch zwei Kreise angedeutet. Bei einem ruhenden Rotationsfüller bewegen sich die beiden Messrohre des Coriolis-Massedurchflussmessgeräts jeweils entgegengesetzt in x-Richtung.

Auf einem sich drehenden Rundfüller führt das Coriolis-Massedurchflussmessgerät eine Rotation um seine Längsachse, die in Z-Richtung liegen soll, aus. Hierbei verursachen Coriolis-Kräfte, dass die Messrohre M1, M2 zusätzlich auch in Y-Richtung ausgelenkt werden.

Die jeweiligen Auslenkungen sind mit kleinen Pfeilen x und y angedeutet. Je größer die Drehzahl n ist, desto mehr nimmt die Auslenkung der beiden Messrohre M1, M2 in Y-Richtung zu.

Unter Umständen können die Amplituden in X und Y-Richtung sogar gleich groß werden.

Die Schwingungsbewegung der beiden Messrohre M1 und M2 wird mit zwei nicht dargestellten Sensoren erfasst. Diese messen jedoch nicht nur die Schwingungsbewegung in X-Richtung sondern auch in geringem Umfang die durch die Rotationsbewegung verursachte Schwingungsbewegung in Y-Richtung. Die Empfindlichkeit der Sensoren auf die Bewegung in Y-Richtung kann bis zu 5% der Bewegung in X-Richtung betragen.

Aufgrund des Einflusses der Schwingungsbewegung in Y-Richtung ergibt sich deshalb bei einer Rotation des Rundfüllers ein Fehler in der Bestimmung des Massedurchflusses *ṁ*. Dieser Fehler wird durch das erfindungsgemäße Verfahren korrigiert. Dadurch kann ein exaktes dosieren bei jedem einzelnen Abfüllvorgang gewährleistet werden.

## Patentansprüche

1. Verfahren zur Bestimmung des Massedurchflusses eines auf einem Rotationsfüller angeordneten Coriolis-Massedurchflussmessgeräts, **gekennzeichnet durch** folgende Verfahrensschritte:
- Herkömmliche Bestimmung des Massedurchflusses *ṁ* mit dem Coriolismassedurchflussmessgerät
- Ermittlung der Drehzahl n des Rotationsfüllers
- Berechnung eines Korrekturwertes Δ *ṁ* = k * n, mit einer Konstanten k
- Bestimmung des Massedurchflusses *ṁ*ₖₒᵣᵣ mit *ṁ*ₖₒᵣᵣ = *ṁ* - Δ *ṁ*

2. Verfahren nach Anspruch 1, **dadurch gekennzeichnet, dass** die Drehzahl n des Rotationsfüllers an das Coriolis-Massedurchflussmessgerät übermittelt wird und die Korrektur des Massedurchflusses im Coriolis-Massedurchflussmessgerät erfolgt.

3. Verfahren nach einem der vorhergehenden Ansprüche, **dadurch gekennzeichnet, dass** mindestens das Messrohr bzw. die Messrohre parallel zur Drehachse des Coriolis-Massedurchflussmessgeräts Rotationsfüllers angeordnet sind.

## Claims

1. Procedure for determining the mass flow of a Coriolis mass flowmeter arranged on a rotary filler, **characterized by** the following process steps:
- Conventional determination of the mass flow ^{m} using the Coriolis mass flowmeter
- Determination of the rotational speed n of the rotary filler
- Calculation of a corrective value Δ^{m} = k * n, with a constant k
- Determination of the mass flow m_{corr} with m_{corr} = m - Δm

2. Procedure as claimed in Claim 1, **characterized in that** the rotary speed n of the rotary filler is communicated to the Coriolis mass flowmeter and the mass flow is corrected in the Coriolis mass flowmeter.

3. Procedure as claimed in one of the previous claims, **characterized in that** at least the measuring tube or measuring tubes of the Coriolis mass flowmeter are arranged parallel to the rotary axis of the rotary filler.

## Revendications

1. Procédé destiné à la détermination du débit massique d'un débitmètre massique Coriolis disposé sur une remplisseuse rotative, **caractérisé par** les étapes de procédé suivantes :
- Détermination usuelle du débit massique m à l'aide du débitmètre massique Coriolis
- Détermination de la vitesse de rotation de la remplisseuse rotative
- Calcul d'une valeur de correction Δ^{m} = k * n, avec une constante k
- Détermination du débit massique mₖₒᵣᵣ avec mₖₒᵣᵣ = m - Δ^{m}

2. Procédé selon la revendication 1, **caractérisé en ce que** la vitesse de rotation n de la remplisseuse de rotation est transmis au débitmètre massique Coriolis et **en ce que** la correction du débit massique intervient dans le débitmètre massique Coriol is.

3. Procédé selon l'une des revendications précédentes, **caractérisé en ce qu'**au moins le tube de mesure ou les tubes de mesure du débitmètre massique Coriolis sont disposés parallèlement à l'axe de rotation de la remplisseuse rotative.
